# EUROPEAN PATENT APPLICATION

(11) **EP 4 611 100 A1**
(43) Date of publication of application: **03.09.2025**
(21) Application number: 23916645.7
(22) Date of filing: 16.01.2023
(51) Int. Cl.: H01M 10/0567, H01M 10/0525

(54) **ELECTROLYTE, SECONDARY BATTERY, BATTERY MODULE, BATTERY PACK, AND ELECTRIC DEVICE**

(71) Applicant: Contemporary Amperex Technology (Hong Kong) Limited, Central (HK)
(72) Inventor: YANG, Xinfeng, Ningde, Fujian 352100 (CN); LEI, Meina, Ningde, Fujian 352100 (CN); CHEN, Zhishan, Ningde, Fujian 352100 (CN); LIN, Zhen, Ningde, Fujian 352100 (CN); LI, Wei, Ningde, Fujian 352100 (CN); WU, Kai, Ningde, Fujian 352100 (CN)
(74) Representative: Gong, Jinping
(86) International application number: PCT/CN2023/072373
(87) International publication number: WO 2024/152154

(57) **Abstract**

The present application relates to the technical field of lithium-ion batteries, in particular to a lithium-ion battery electrolyte solution, a secondary battery, a battery module, a battery pack, and an electrical device. The lithium-ion battery electrolyte solution includes a lithium salt, an organic solvent and an additive. The additive includes a compound represented by Formula I: 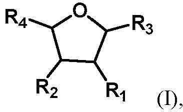 where R₁ to R₄ are each independently selected from a hydrogen atom, a halogen atom, a nitrate ester group, a nitrite ester group, a substituted or unsubstituted C1 to C12 alkyl, and a substituted or unsubstituted C1 to C12 alkoxy, provided that at least one of R₁ to R₄ is a nitrate ester group. The present application solves the problems of poor solubility of existing additives and low conductivity of a formed solid electrolyte interphase (SEI).

## Description

### TECHNICAL FIELD

The present application relates to the technical field of lithium-ion batteries, in particular to a lithium-ion battery electrolyte solution, a secondary battery, a battery module, a battery pack, and an electrical device.

### BACKGROUND

To achieve the objectives for carbon dioxide peaking and carbon neutrality, electrochemical energy storage devices mainly based on lithium-ion batteries will be more widely used in fields such as electric vehicles and stationary energy storage, and meanwhile, lithium-ion batteries will also face more complex usage scenarios. When batteries are used under extreme conditions such as low-temperature charging, high-rate charging, pulse charging, and high-state-of-charge charging, there is a risk of lithium plating in the batteries, which can cause performance degradation, and even safety hazards such as fire and explosion.

Although various additives for lithium-ion battery electrolyte solutions have been reported in the prior art to improve the above-mentioned problems, these additives have obvious shortcomings, such as the inability to form a solid electrolyte interphase (SEI) film with high ionic conductivity dominated by organic components, or the poor solubility in carbonate solvents, requiring the addition of other cosolvents to promote dissolution of the same, further resulting in uncertain potential hazards.

Therefore, the present invention is proposed.

### SUMMARY

A main objective of the present application is to provide a lithium-ion battery electrolyte solution, a secondary battery, a battery module, a battery pack, and an electrical device, so as to solve the problems of poor solubility of existing additives and low conductivity of a formed SEI.

To achieve the foregoing objective, the present application provides the following technical solution:

A first aspect of the present application provides a lithium-ion battery electrolyte solution, where the lithium-ion battery electrolyte solution includes a lithium salt, an organic solvent and an additive; and the additive includes a compound represented by Formula I:

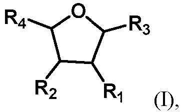

Where R₁ to R₄ are each independently selected from a hydrogen atom, a halogen atom, a nitrate ester group, a nitrite ester group, a substituted or unsubstituted C1 to 12 alkyl, and a substituted or unsubstituted C1 to C12 alkoxy, provided that at least one of R1 to R4 is a nitrate ester group.

Therefore, the present application introduces a furan ring additive with a nitrate ester group into the electrolyte solution, and the additive has good solubility in commonly used lithium-ion battery electrolyte solution systems and does not require cosolvents. The nitrate ester group on rings of the additive can be decomposed at a lower reduction potential to form a nitride-rich SEI film, and the SEI has excellent lithiophilicity and can regulate the precipitation morphology of a lithium metal under lithium plating conditions to be more uniform, thereby avoiding internal short circuits / thermal runaway caused by growth of dendritic lithium; in addition, the nitride-rich SEI film also has higher lithium-ion conductivity and higher Young's modulus, which can achieve an effect of improving kinetic performance and extending working life of the battery.

Based on this, the types and combinations of each substituent group can be further optimized to improve various performances, such as the kinetic performance of batteries, the solubility of additives and the safety, as listed below.

In some embodiments, substitutions in each substituent group selected by R₁ to R₄ are independently selected from one or more of a halogen atom.

In some embodiments, the halogen atom is F.

In some embodiments, R₁ to R₄ are each independently selected from a hydrogen atom, a halogen atom, a nitrate ester group, a nitrite ester group, a substituted or unsubstituted C1 to C6 alkyl, and a substituted or unsubstituted C1 to C6 alkoxy.

In some embodiments, R₁ to R₄ are each independently selected from a hydrogen atom, a halogen atom, a nitrate ester group, a nitrite ester group, a substituted or unsubstituted C1 to C2 alkyl, and a substituted or unsubstituted C1 to C2 alkoxy.

In some embodiments, R₁ to R₄ are each independently selected from a hydrogen atom, a halogen atom, a nitrate ester group, a nitrite ester group, methyl, ethyl, and trihaloethyl.

In some embodiments, R₁ to R₄ are each independently selected from a hydrogen atom, fluorine, a nitrate ester group, a nitrite ester group, methyl, ethyl, and trifluoroethyl.

In some embodiments, the additive includes one or more of following compounds:

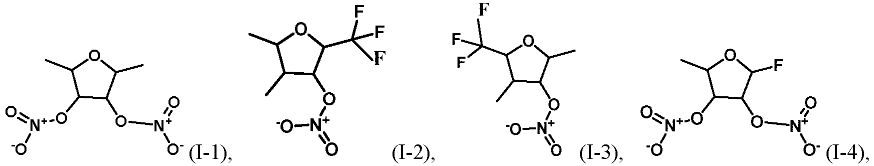

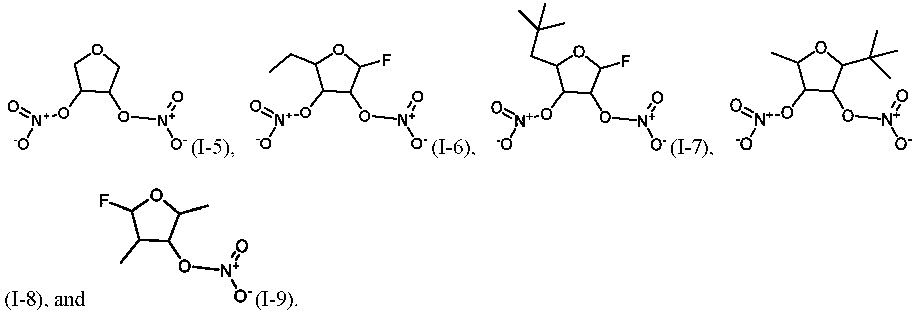

In addition, in some embodiments, the content of an additive, the type and concentration of a lithium salt that is compatible, and the type of an organic solvent can be further optimized to improve the kinetic performance of the battery, as listed below.

In some embodiments, the mass percent of the additive is 0.03% to 5%, and preferably 0.1% to 3%.

In some embodiments, the lithium salt is selected from one or more of lithium hexafluorophosphate, lithium bis(fluoro-sulfonyl)imide, lithium tetrafluoroborate, lithium bistrifluoromethanesulfonimide, lithium difluoro oxalate borate, lithium bis(oxalate)borate, lithium perchlorate, lithium hexafluoroarsenate, and lithium trifluoromethanesulfonate.

In some embodiments, the lithium salt is selected from one or more of lithium hexafluorophosphate or lithium bis(fluoro-sulfonyl)imide.

In some embodiments, the concentration of the lithium salt is 0.5 mol/L to 2.0 mol/L, and more preferably 0.8 mol/L to 1.5 mol/L.

In some embodiments, the organic solvent is selected from cyclic carbonate, cyclic carboxylate, chain carbonate or a chain carboxylate compound of C1 to C8.

In some embodiments, the organic solvent is selected from one or more of dimethyl carbonate, diethyl carbonate, ethyl methyl carbonate, dipropyl carbonate, methyl propyl carbonate, ethylene carbonate, propylene carbonate, ethyl acetate, ethyl propionate, propyl propionate, butyrolactone, methyl trimethylacetate, and methyl pentanoate.

In some embodiments, in molecules of the organic solvent, a content of water molecules is smaller than or equal to 10 ppm, and a content of hydrofluoric acid is smaller than or equal to 200 ppm.

A second aspect of the present application provides a secondary battery, the secondary battery including the lithium-ion battery electrolyte solution according to the first aspect of the present application.

A third aspect of the present application provides a battery module, the battery module including the secondary battery according to the second aspect of the present application.

A fourth aspect of the present application provides a battery pack, the battery pack including the battery module according to the third aspect of the present application.

A fifth aspect of the present application provides an electrical device, the electrical device including at least one of the secondary battery according to the second aspect of the present application, the battery module according to the third aspect of the present application, or the battery pack according to the fourth aspect of the present application.

In summary, compared with the prior art, the present invention achieves the following technical effects:

(1) Furan ring additives with nitrate ester groups have better compatibility and excellent solubility in existing carbonate electrolyte solvents.

(2) Furan ring additives with nitrate ester groups have a higher negative electrode reduction potential, which preferentially undergoes reduction to effectively form a nitride-rich SEI film compared to other solvents or additives during a formation process; the nitride-rich SEI has a high ionic conductivity and high Young's modulus, which can not only endow a battery cell with excellent rate performance, but also realize uniform deposition of a lithium metal under lithium plating conditions due to the lithiophilicity of the nitride itself, avoiding the occurrence of plating of lithium dendrites, thereby reducing the risk that the separator is penetrated and an internal short circuit is caused, which improves the safety performance of the battery.

### BRIEF DESCRIPTION OF DRAWINGS

FIG. 1 shows a formation DQ/DV diagram of Embodiment 1 and Comparative Embodiment 1.
FIG. 2 shows an anode XPS N1s spectrum after formation of Embodiment 1 and Comparative Embodiment 1.
FIG. 3 shows a lithium plating window diagram of Embodiment 1 and Comparative Embodiment 1 at 25 degrees Celsius.
FIG. 4 shows an interface diagram of lithium plating under overcharging in Embodiment 1.
FIG. 5 shows an interface diagram of lithium plating under overcharging in Comparative Embodiment 1.
FIG. 6 is a schematic diagram of a secondary battery according to an embodiment of the present application;
FIG. 7 is an exploded view of the secondary battery shown in FIG. 6 according to an embodiment of the present application; and
FIG. 8 is a schematic diagram of a battery module according to an embodiment of the present application;
FIG. 9 is a schematic diagram of a battery pack according to an embodiment of the present application;
FIG. 10 is an exploded view of the battery pack shown in FIG. 9 according to an embodiment of the present application;
FIG. 11 is a schematic diagram of an electrical device that uses a secondary battery as a power supply according to an embodiment of the present application.

### List of reference numerals:

1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following describes in detail a lithium-ion battery electrolyte solution and a positive electrode plate, a secondary battery, a battery module, a battery pack, and an electrical device according to the present application with due reference to accompanying drawings. However, unnecessary details may be omitted in some cases. For example, a detailed description of a well-known matter or repeated description of a substantially identical structure may be omitted. That is intended to prevent the following descriptions from becoming unnecessarily lengthy, and to facilitate understanding by a person skilled in the art. In addition, the accompanying drawings and the following description are intended for a person skilled in the art to fully understand the present application, but are not intended to limit the subject matter set forth in the claims.

"Range" disclosed in the present application is limited in the form of lower limit and upper limit, and given range is limited by selecting a lower limit and an upper limit, and the selected lower limit and upper limit define the boundary of a special range. The range limited in this way may include end values or not include end values, and may be combined arbitrarily, that is, any lower limit may be combined with any upper limit to form a range. For example, if the range of 60 to 120 and 80 to 110 is listed for a particular parameter, it is understood that the range of 60 to 110 and 80 to 120 is also expected. In addition, if the minimum range value 1 and 2 are listed, and if the maximum range value 3, 4 and 5 are listed, then the following ranges can be all expected: 1 to 3, 1 to 4, 1 to 5, 2 to 3, 2 to 4 and 2 to 5. In the present application, unless otherwise specified, numerical range "a to b" represents the abbreviation of any real number combination between a and b, where a and b are all real numbers. For example, the numerical range "0 to 5" means that all real numbers between "0 to 5" are listed in this disclosure, and "0 to 5" is just an abbreviation of these numerical combinations. In addition, when a parameter is expressed as an integer ≥ 2, it is equivalent to disclosing that the parameter is, for example, an integer 2, 3, 4, 5, 6, 7, 8, 9, 10, 11, 12, etc.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps hereof may be performed sequentially or randomly, preferably sequentially. For example, the method includes steps (a) and (b), indicating that the method may include steps (a) and (b) performed sequentially, or may include steps (b) and (a) performed sequentially. For example, the method may further include step (c), indicating that step (c) may be added to the method in any order, for example, the method may include steps (a), (b) and (c), or may include steps (a), (c) and (b), or may include steps (c), (a) and (b), etc.

Unless otherwise expressly specified, "include" and "include" mentioned herein mean open-ended inclusion, or closed-ended inclusion. For example, the terms "include" and "include" may mean inclusion of other items that are not recited, or inclusion of only the items recited.

Unless otherwise expressly specified, the term "or" used herein is inclusive. For example, the phrase "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Unless otherwise specified, in the present application, the term 'substituted' represents that one or more hydrogen atoms in a given structure are substituted by specific substituent groups. Unless otherwise indicated, an optional substituent group can be substituted at various substitutable positions of the group. When more than one position in the given structural formula can be substituted by one or more substituent groups selected from a specific group, the substituent groups can be substituted equally or differently at each position. The substituent groups mentioned therein may be, but are not limited to, deuterium, fluorine, chlorine, bromine, iodine, cyano, hydroxyl, nitro, amino, carboxyl, alkyl, alkoxy, alkoxyalkyl, alkoxyalkoxy, alkoxyalkylamino, aryloxy, heteroaryloxy, heterocyclyloxy, arylalkoxy, heteroarylalkoxy, heterocyclylalkoxy, cycloalkylalkoxy, alkylamino, alkylaminoalkyl, alkylaminoalkylamino, cycloalkylamino, cycloalkylalkylamino, alkylthio, haloalkyl, haloalkoxy, hydroxyl substituted alkyl, hydroxyl substituted alkylamino, cyano substituted alkyl, cyano substituted alkoxy, cyano substituted alkylamino, amino substituted alkyl, alkyl acyl, heteroalkyl, cycloalkyl, cycloalkenyl, cycloalkylalkyl, heterocyclyl, heterocyclylalkyl, heterocyclylacyl, aryl, arylalkyl, arylamino, heteroaryl, heteroarylalkyl, heteroarylamino, amide, sulfonyl, aminosulfonyl, or the like.

Unless otherwise specified, the description methods used in the present invention, such as "each... independently", "... each independently", and "... independently", can be used interchangeably and all should be understood in a broad sense, which can refer to specific options expressed between the same symbols in different groups that do not affect each other, or can refer to specific options expressed between the same symbols in the same group that do not affect each other.

Unless otherwise specified, in various parts of this specification, the substituent groups of the compounds disclosed in the present invention are disclosed according to the type or range of groups. It is hereby pointed out that the present invention includes every independent secondary combination of each member belonging to these types and ranges of the groups. For example, the terms "C1 to C12 alkyl" or "C1 to 12 alkyl" specifically refer to independently disclosed methyl, ethyl, C3 alkyl, C4 alkyl, C5 alkyl, C6 alkyl, C7 alkyl, C8 alkyl, C9 alkyl, C10 alkyl, C11 alkyl, and C12 alkyl.

The term "alkyl" or "alkyl group" used in the present invention refers to a saturated linear or branched monovalent hydrocarbyl group containing a specified number of carbon atoms; where the alkyl group is optionally substituted with one or more substituent groups as described in the present invention.

In order to improve the kinetic performance and safety performance of lithium-ion batteries, substances such as allyl ethyl carbonate (AEC) are commonly used as electrolyte solution additives, but AEC additives cannot form SEI films with high ion conductivity dominated by organic components and may deteriorate the kinetic performance of the battery cells.

Based on this, the present application provides a lithium-ion battery electrolyte solution containing a furan ring additive with a nitrate ester group. The lithium-ion battery electrolyte solution specifically includes a lithium salt, an organic solvent and an additive; where the additive includes a compound represented by Formula I:

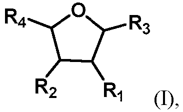

Where R₁ to R₄ are each independently selected from a hydrogen atom, a halogen atom, a nitrate ester group, a nitrite ester group, a substituted or unsubstituted C1 to 12 alkyl, and a substituted or unsubstituted C1 to C12 alkoxy, provided that at least one of R1 to R4 is a nitrate ester group.

Experiments have found that a furan ring additive with a nitrate ester group has been introduced into the electrolyte solution, and the additive has good solubility in a commonly used lithium-ion battery electrolyte solution system and does not require a cosolvent. The nitrate ester group on the additive ring can be decomposed at a lower reduction potential to form a nitride-rich SEI film, and the SEI has excellent lithiophilicity and can regulate the precipitation morphology of a lithium metal under lithium plating conditions to be more uniform, avoiding internal short circuit / thermal runaway caused by dendritic lithium growth; in addition, the nitride-rich SEI film also has higher lithium-ion conductivity and higher Young's modulus, which can achieve the effect of improving kinetic performance and extending working life of the battery.

In the above Formula I, the halogen atom refers to any one of fluorine, chlorine, bromine, and iodine.

In the above Formula I,C1 to C12 alkylincludes but is not limited to, methyl (Me, -CH₃), ethyl (Et, -CH₂CH₃), n-propyl (n-Pr, -CH₂CH₂CH₃), isopropyl (i-Pr, -CH(CH₃)₂), n-butyl (n-Bu, - CH₂CH₂CH₂CH₃), isobutyl (i-Bu, -CH₂CH(CH₃)₂), sec-butyl (s-Bu, -CH(CH₃)CH₂CH₃), tert-butyl (t-Bu, - C(CH₃)₃), n-pentyl (-CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), n-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), 3,3-dimethyl-2-butyl (-CH(CH₃)C(CH₃)₃), n-heptyl, n-octyl, linear or branched nonyl, linear or branched decyl, linear or branched undecyl, linear or branched dodecyl, or the like.

In the above Formula I, C1 to C12 alkoxy includes but is not limited to, methoxy (MeO, -OCH₃), ethoxy(EtO, -OCH₂CH₃), 1-propoxy (n-PrO, n-propoxy, -OCH₂CH₂CH₃), 2-propoxy (i-PrO, i-propoxy, - OCH(CH₃)₂), 1-butoxy (n-BuO, n-butoxy, -OCH₂CH₂CH₂CH₃), 2-methyl-1-propoxy (i-BuO, i-butoxy, - OCH₂CH(CH₃)₂), 2-butoxy (s-BuO, s-butoxy, -OCH(CH₃)CH₂CH₃), 2-methyl-2-propoxy (t-BuO, t-butoxy, -OC(CH₃)₃), 1-pentyloxy (n-pentyloxy, -OCH₂CH₂CH₂CH₂CH₃), 2-pentyloxy (-OCH(CH₃)CH₂CH₂CH₃), 3-pentyloxy (-OCH(CH₂CH₃)₂), 2-methyl-2-butoxy (-OC(CH₃)₂CH₂CH₃), 3-methyl-2-butoxy (-OCH(CH₃)CH(CH₃)₂), 3-methyl-1-butoxy (-OCH₂CH₂CH(CH₃)₂), 2-methyl-1-butoxy (-OCH₂CH(CH₃)CH₂CH₃), nonyloxy, decyloxy, undecyloxy, dodecyloxy, or the like.

In the above Formula I, at least one of R₁ to R₄ is a nitrate ester group, which means there is one nitrate ester group, or two nitrate ester groups, or three nitrate ester groups, or four nitrate ester groups. For example, when there are two nitrate ester groups, the two nitrate ester groups can be in an ortho or meta position relationship.

The lithium salt and organic solvent in the above electrolyte solution are any lithium salt and organic solvent that can be used for lithium-ion batteries.

In some embodiments, the substitutions in each substituent group selected by R₁ to R₄ is independently selected from one or more of the halogen atoms. Introducing halogen can improve the solubility of additives in carbonate solvents without interfering with the formation of nitride-rich SEI films.

In some embodiments, the halogen atom is more preferably F.

In some embodiments, R₁ to R₄ are each independently selected from a hydrogen atom, a halogen atom, a nitrate ester group, a nitrite ester group, a substituted or unsubstituted C1 to C6 alkyl, and a substituted or unsubstituted C1 to C6 alkoxy. Short chain substituent groups are conducive to improving solubility and reducing the weight of additives.

In some embodiments, R₁ to R₄ are each independently selected from a hydrogen atom, a halogen atom, a nitrate ester group, a nitrite ester group, a substituted or unsubstituted C1 to C2 alkyl, and a substituted or unsubstituted C1 to C2 alkoxy.

In some embodiments, R₁ to R4 are each independently selected from a hydrogen atom, a halogen atom, a nitrate ester group, a nitrite ester group, methyl, ethyl and trihaloethyl. An additive combined by these substituent groups can achieve better rate performance while avoiding the occurrence of plating of lithium dendrites to a greater extent. The combination of these substituent groups is arbitrary provided that it contains at least one nitrate ester group, including but not limited to those listed in Table 1.

**Table 1 Substituent groups in additives**

| R₁ | R₂ | R₃ | R₄ |
|---|---|---|---|
| hydrogen | fluorine | methyl | nitrate ester group |
| hydrogen | fluorine | ethyl | nitrate ester group |
| hydrogen | fluorine | nitrate ester group | nitrate ester group |
| hydrogen | fluorine | fluorine | nitrate ester group |
| hydrogen | fluorine | hydrogen | nitrate ester group |
| hydrogen | fluorine | trifluoroethyl | nitrate ester group |
| fluorine | fluorine | methyl | nitrate ester group |
| methyl | fluorine | methyl | nitrate ester group |
| ethyl | fluorine | methyl | nitrate ester group |
| nitrate ester group | fluorine | methyl | nitrate ester group |
| nitrate ester group | nitrate ester group | methyl | methyl |
| nitrate ester group | methyl | trifluoroethyl | methyl |
| nitrate ester group | methyl | methyl | trifluoroethyl |
| nitrate ester group | nitrate ester group | fluorine | methyl |
| nitrate ester group | nitrate ester group | hydrogen | hydrogen |
| nitrate ester group | nitrate ester group | fluorine | ethyl |
| nitrate ester group | nitrate ester group | fluorine | trifluoroethyl |
| nitrate ester group | nitrate ester group | methyl | trifluoroethyl |
| nitrate ester group | methyl | methyl | fluorine |

In some embodiments, R₁ to R₄ are each independently selected from a hydrogen atom, fluorine, a nitrate ester group, a nitrite ester group, methyl, ethyl, and trifluoroethyl.

In some embodiments, the additive includes one or more of following compounds:

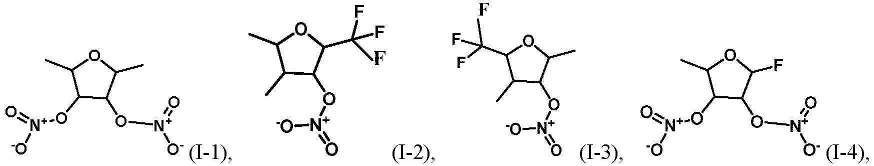

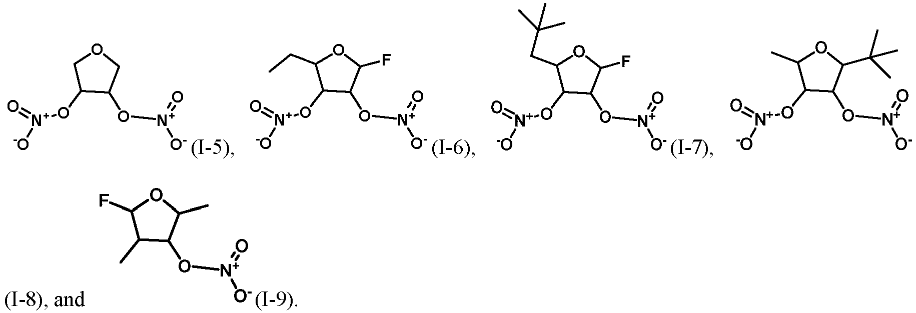

In some embodiments, the mass percent of the additive is 0.03% to 5%. If the content of the additive in the electrolyte solution is too low, a complete SEI film cannot be formed on the surface of the negative electrode, so that side reactions of the electrolyte solution on the negative electrode cannot be effectively inhibited; if the content of the additive is too high, a too thick SEI film is formed on the surface of the negative electrode, causing an increase in impedance and deterioration of the kinetic performance of lithium-ion batteries. For this purpose, the mass percent of the additive can be selected within the range of 0.03% to 5%, including but not limited to 0.03%, 0.05%, 0.07%, 0.1%, 0.15%, 0.2%, 0.3%, 0.5%, 1%, 1.5%, 2%, 2.5%, 3%, 3.5%, 4%, 5%, preferably including 0.1% to 3%, etc.

In some embodiments, the lithium salt is selected from one or more of lithium hexafluorophosphate, lithium bis(fluoro-sulfonyl)imide, lithium tetrafluoroborate, lithium bistrifluoromethanesulfonimide, lithium difluoro oxalate borate, lithium bis(oxalate)borate, lithium perchlorate, lithium hexafluoroarsenate, and lithium trifluoromethanesulfonate.

In some embodiments, the lithium salt is selected from one or more of lithium hexafluorophosphate or lithium bis(fluoro-sulfonyl)imide.

In some embodiments, the concentration of the lithium salt is 0.5 mol/L to 2.0 mol/L, and more preferably 0.8 mol/L to 1.5 mol/L, which allows for a high energy density of the battery, and a good synergistic effect with additives.

In some embodiments, the organic solvent is selected from cyclic carbonate, cyclic carboxylate, chain carbonate or a chain carboxylate compound of C1 to C8.

In some embodiments, the organic solvent is selected from one or more of dimethyl carbonate, diethyl carbonate, ethyl methyl carbonate, dipropyl carbonate, methyl propyl carbonate, ethylene carbonate, propylene carbonate, ethyl acetate, ethyl propionate, propyl propionate, butyrolactone, methyl trimethylacetate, and methyl pentanoate.

In some embodiments, in molecules of the organic solvent, a content of water molecules is smaller than or equal to 10 ppm, and a content of hydrofluoric acid is smaller than or equal to 200 ppm. Controlling these two indicators can improve cycle life and safety.

Next, a secondary battery, a battery module, a battery pack, and an electrical device according to the present application are described below in detail with due reference to drawings.

In an embodiment of the present application, a secondary battery is provided.

Normally, a secondary battery includes a positive electrode plate, a negative electrode plate, an electrolyte, and a separator. During the charging and discharging process of the battery, active ions are shuttled between the positive and negative electrode plate by intercalation and deintercalation. The electrolyte serves to conduct ions between the positive electrode plate and the negative electrode plate. The separator is disposed between the positive electrode plate and negative electrode plate, and mainly serves to prevent a short circuit between the positive electrode and negative electrode, while allowing ions to pass through.

### Positive electrode plate

The positive electrode plate includes a positive current collector and a positive electrode film layer that overlays at least one surface of the positive current collector. The positive electrode film layer includes a positive active material according to the first aspect of the present application.

As an example, the positive current collector includes two surfaces opposite to each other in a thickness direction of the positive current collector. The positive electrode film layer is disposed on either or both of the two opposite surfaces of the positive current collector.

In some embodiments, a metal foil or a composite current collector may be used as the positive current collector. For example, an aluminum foil may be used as the metal foil. The composite current collector may include a polymer material base layer and a metal layer formed on at least one surface of the polymer material base layer. The composite current collector may be formed by overlaying a polymer base material (such as polypropylene (PP), polyethylene terephthalate (PET), polybutylene terephthalate (PBT), polystyrene (PS), or polyethylene (PE) with a metal material) (aluminum, aluminum alloy, nickel, nickel alloy, titanium, titanium alloy, silver, and silver alloy, and so on).materials.

In some embodiments, when the secondary battery is a lithium-ion battery, the positive active material can be a positive active material known for use in lithium-ion batteries in the art. As an example, the positive active material may include at least one of the following materials: a lithium-containing phosphate with an olivine structure, a lithium transition metal oxide and respective modified compounds thereof. However, the present application is not limited to such materials, and other conventional materials usable as a positive active material of a battery may be used instead. Of such positive active materials, one may be used alone, or at least two may be used in combination. Examples of the lithium transition metal oxide may include, but not limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM₃₃₃)), LiNi_{0.5}Co_{0.2}Mn_{0.3}O₂ (briefly referred to as NCM₅₂₃), LiNi_{0.5}Co_{0.25}Mn_{0.25}O₂ (briefly referred to as NCM₂₁₁), LiNi_{0.6}Co_{0.2}Mn_{0.2}O₂ (briefly referred to as NCM₆₂₂), LiNi_{0.8}Co_{0.1}Mn_{0.1}O₂ (briefly referred to as NCM₈₁₁), lithium nickel cobalt aluminium oxide (such as LiNi_{0.85}Co_{0.15}Al_{0.05}O₂) and a modified compound thereof. Examples of the lithium-containing phosphate with the olivine structure may include, but not limited to, at least one of lithium iron phosphate (such as LiFePO₄ (briefly referred to as LFP)), a composite of lithium iron phosphate and carbon, lithium manganese phosphate (such as LiMnPO4), a composite of lithium manganese phosphate and carbon, lithium manganese iron phosphate, or a composite of lithium manganese iron phosphate and carbon.

In some embodiments, the positive electrode film layer can also optionally include a binder. As an example, the binder may include at least one of polyvinylidene difluoride (PVDF), polytetrafluoroethylene (PTFE), polyvinylidene fluoride-tetrafluoroethylene-propylene terpolymer, polyvinylidene fluoride-hexafluoropropylene-tetrafluoroethylene ternary copolymer, tetrafluoroethylene-hexafluoropropylene copolymer, or fluorinated acrylate resin.

In some embodiments, the positive electrode film layer can also optionally include a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold calendering to obtain the positive electrode plate.

### Negative electrode plate

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, a metal foil or a composite current collector may be used as the negative current collector. For example, a copper foil can be used as the metal foil. The composite current collector may include a polymer material base layer and a metal layer formed on at least one surface of the polymer material base layer. The composite current collector may be formed by overlaying a polymer base material (such as polypropylene (PP), polyethylene terephthalate (PET), polybutylene terephthalate (PBT), polystyrene (PS), or polyethylene (PE) with a metal material) (copper, copper alloy, nickel, nickel alloy, titanium, titanium alloy, silver, and silver alloy, and so on).

In some embodiments, the negative active material may be a negative active material known for use in batteries in the art. As an example, the negative active material may include at least one of the following materials: artificial graphite, natural graphite, soft carbon, hard carbon, silicon-based material, tin-based material, lithium titanate, and the like. The silicon-based material can be selected from at least one of elemental silicon, a silicon oxide compound, a silicon carbon composite, a silicon nitrogen composite, and a silicon alloy. The tin-based material can be selected from at least one of elemental tin, a tin oxide compound, and a tin alloy. But the present application is not limited to these materials, and other traditional materials usable as negative electrode active materials for batteries can also be used. Of such negative active materials, one may be used alone, or at least two may be used in combination.

In some embodiments, the negative film layer further optionally includes a binder. The binder may be selected from at least one of styrene-butadiene rubber (SBR), a polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally include a conductive agent. The conductive agent can be selected from at least one of superconductive carbon, acetylene black, carbon black, Ketjen black, carbon dots, carbon nanotubes, graphene, or carbon nanofibers.

In some embodiments, the negative electrode film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold pressing to obtain the negative electrode plate.

### [Electrolyte]

The electrolyte serves to conduct ions between the positive electrode plate and the negative electrode plate. The electrolyte defined in the present application is liquid, i.e., electrolyte solution. The electrolyte solution has the composition described above.

In some embodiments, the electrolyte solution may optionally include other additives. For example, the additive may include a negative film-forming additive or a positive film-forming additive. The additive may further include an additive capable of improving specified performance of the battery, for example, an additive for improving overcharge performance of the battery, or an additive for improving high-temperature or low-temperature performance of the battery.

### [Separator]

In some embodiments, the secondary battery further includes a separator. The present application has no particular limitation on the type of separator, and any known porous separator with good chemical stability and mechanical stability may be selected.

In some embodiments, the separator may be made of a material that is selected from at least one of glass fiber, non-woven fabric, polyethylene, polypropylene, and polyvinylidene difluoride. The separator can be a single-layer thin film or a multi-layer composite thin film, which is not particularly limited herein. When the separator is a multi-layer composite film, the material types of each layer can be the same or different, which is not particularly limited herein.

In some embodiments, the positive electrode plate, the negative electrode plate, and the separator may be made into an electrode assembly by winding or stacking.

In some embodiments, the secondary battery may include an outer packaging. The outer packaging may be used to package the electrode assembly and the electrolyte.

In some embodiments, the outer package of the secondary battery may be a hard housing, such as a hard plastic housing, an aluminum housing, a steel shell, etc. The outer package of the secondary battery may also be a soft package, such as a bag-type soft package. The material of the soft package may be plastic, and examples of the plastic include polypropylene, polybutylene terephthalate and polybutylene succinate.

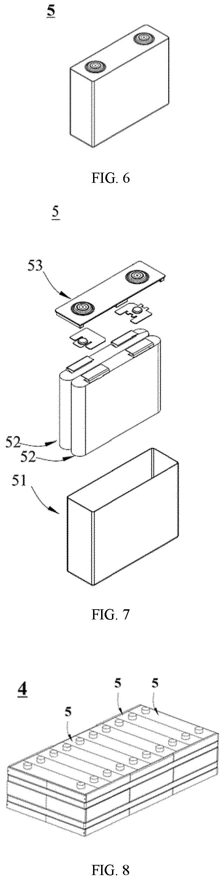

The shape of the secondary battery is not particularly limited in the present application, and may be cylindrical, square or in any other shape. For example, FIG.6 shows a square secondary battery 5 as an example.

In some embodiments, referring to FIG. 7, the outer package may include a housing 51 and a cover plate 53. The housing 51 may include a bottom plate and a side plate connected to the bottom plate, and the bottom plate and the side plate are enclosed to form an accommodation cavity. The housing 51 has an opening communicated with the accommodation cavity, and the opening can be covered with the cover plate 53 to close the accommodation cavity. The positive electrode plate, the negative electrode plate, and the separator can be wound or stacked to form an electrode assembly 52. The electrode assembly 52 is packaged in the accommodation cavity. The electrolyte solution is infiltrated in the electrode assembly 52. The number of the electrode assembly 52 contained in the secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 8 shows a battery module 4 as an example. Referring to FIG. 8, in the battery module 4, a plurality of secondary batteries 5 may be arranged sequentially along the length direction of the battery module 4. Certainly, the secondary batteries can also be arranged in any other manner. The plurality of secondary batteries 5 can be further fixed by fasteners.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

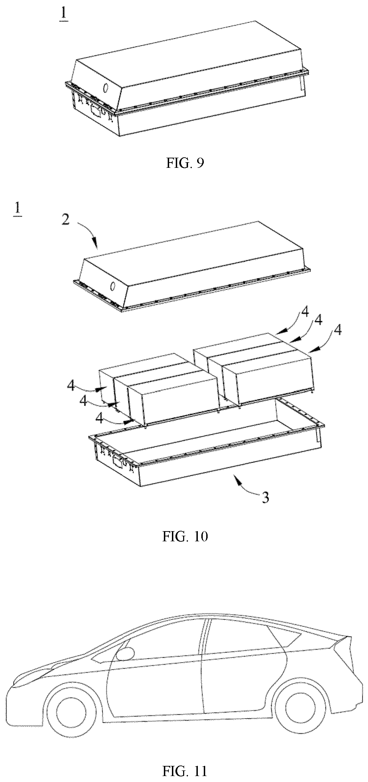

FIG. 9 and FIG. 10 show a battery pack 1 as an example. Referring to FIG. 9 and FIG. 10, the battery pack 1 may include a battery box and a plurality of battery modules 4 disposed in the battery box. The battery box includes an upper box 2 and a lower box 3. The upper box 2 can cover the lower box 3 to form a closed space for accommodating the battery modules 4. The plurality of battery modules 4 can be arranged in the battery case in any manner.

In addition, the present application further provides an electrical device, which includes at least one of the secondary battery, battery module or battery pack provided in the present application. The secondary battery, battery module or battery pack may be used as a power source for the electrical device, and may also be used as an energy storage unit for the electrical device. The electrical device may include a mobile device (such as a mobile phone, a laptop, etc.), an electric vehicle (such as a pure electric vehicle, a hybrid electric vehicle, a plug-in hybrid electric vehicle, an electric bicycle, an electric scooter, an electric golf cart, an electric truck, etc.), an electric train, a ship and a satellite, an energy storage system, etc., but is not limited to these.

As the electrical device, a secondary battery, a battery module or a battery pack can be selected according to the use requirements thereof.

FIG. 11 shows an electrical device as an example. The electrical device can be a battery electric vehicle, a hybrid electric vehicle, or a plug-in hybrid electric vehicle, etc. A battery pack or a battery module may be adopted in order to meet the requirements of the electrical device for a high power and a high energy density of the secondary battery.

In another example, the device may be a mobile phone, a tablet computer, a notebook computer, or the like. The device is generally required to be thin and light, and may have a secondary battery as a power supply.

### Embodiments

Hereinafter, the embodiments of the present application will be described. The embodiments described below are exemplary and are only used to explain the present application, and should not be construed as limiting the present application. If no specific technique or condition is indicated in the embodiments, the techniques or conditions described in the literature in this field or the product specifications are used. The reagents or instruments used that do not indicate the manufacturer are all conventional products that can be obtained commercially.

### Embodiment 1

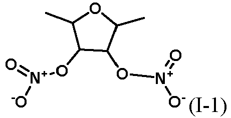

A preparation method of a high-performance lithium-ion battery electrolyte solution, including the following steps:
Ethylene carbonate, propylene carbonate, and dimethyl carbonate were mixed evenly, LiPF₆ was added, and finally a compound of Formula (I-1) (tetrahydrofuran-2,5-dimethyl, 3,4-diol dinitrogen ester) was added to obtain a high-performance electrolyte solution, where a volume ratio of ethylene carbonate to propylene carbonate to dimethyl carbonate is 5:2:3, a concentration of lithium hexafluorophosphate is 1 mol/L, and a concentration of the compound of Formula (I-1) is 0.03 wt.%.

A lithium-ion battery was assembled by adopting the electrolyte solution, where ternary layered LiNi_{0.8}Co_{0.1}Mn_{0.1}O₂ was taken as a positive electrode material, artificial graphite was taken as a negative electrode material, and Celgard PE was taken as a separator.

### Embodiments 2 to 5

The electrolyte solution only differs from that of Embodiment 1 in the addition amount of the compound of Formula (I-1), as shown in Table 2 below.

### Comparative Embodiment 1

The electrolyte solution only differs from that of Embodiment 1 in that the compound of Formula (I-1) is not added.

**Table 2 Content (mass percent) of additive of electrolyte solution in each embodiment**

| Embodiments | Content of compound of Formula (I-1) in electrolyte solution |
|---|---|
| Embodiment 1 | 0.03% |
| Embodiment 2 | 0.1% |
| Embodiment 3 | 0.5% |
| Embodiment 4 | 2% |
| Embodiment 5 | 5% |
| Comparative Embodiment 1 | 0% |

A lithium-ion battery was assembled by adopting the electrolyte solutions of the above embodiments and comparative embodiments, where ternary layered LiNi_{0.8}Co_{0.1}Mn_{0.1}O₂ was taken as a positive electrode material, artificial graphite was taken as a negative electrode material, and Celgard PE was taken as a separator.

### Testing on the batteries of the above embodiments and comparative embodiments:

(1) The DQ/DV test was conducted under a charging condition of 0.04 C;
(2) Three-electrode lithium plating window test was conducted at 25 degrees Celsius within a voltage range of 2.8-4.3;
(3) The batteries assembled with different electrolyte solutions were overcharged at a rate of 1 C until voltage reached 4.7 V, and then the batteries were disassembled to inspect the overcharge interface.

The battery performance results are shown in Table 3.

**Table 3 Battery performance at different contents of additives**

| Embodiments | 500th-cycle capacity retention rate % | Lithium plating performance (overcharge by 120%) |
|---|---|---|
| Embodiment 1 | 94.16% | Slight lithium plating |
| Embodiment 2 | 94.65% | No lithium plating |
| Embodiment 3 | 94.40% | No lithium plating |
| Embodiment 4 | 95.32% | No lithium plating |
| Embodiment 5 | 94.67% | Slight lithium plating |
| Comparative Embodiment 1 | 93.69% | Massive lithium plating |

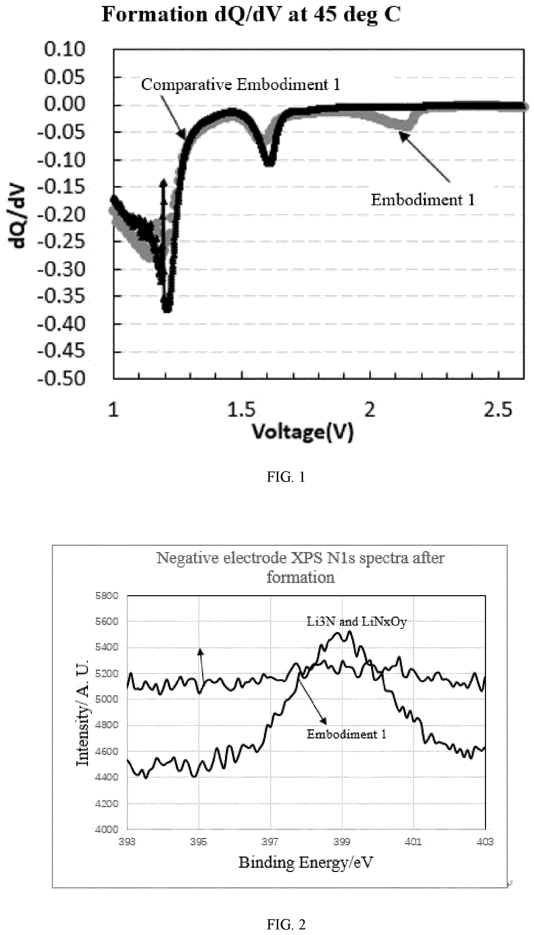

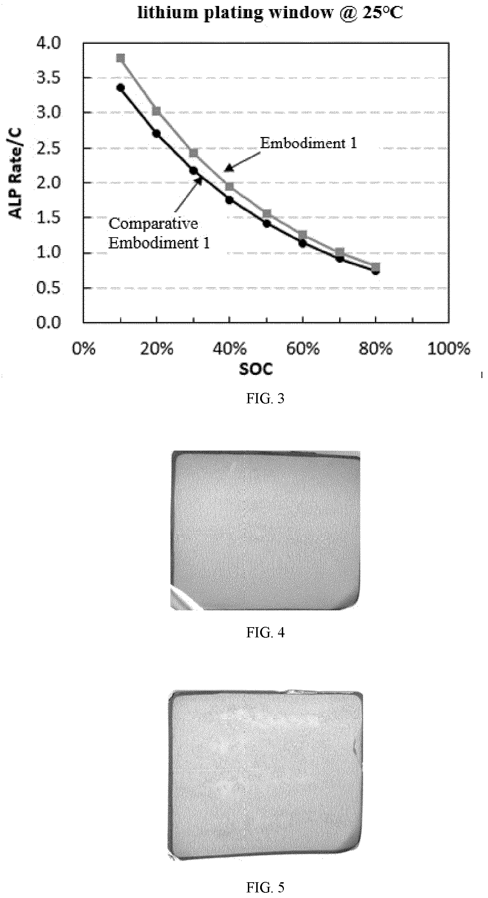

The formation DQ/DV curves of Embodiment 2 and Comparative Embodiment 1 are shown in FIG. 1, the negative electrode XPS N1s spectra after formation are shown in FIG. 2, the lithium plating window diagram at 25 degrees Celsius is shown in FIG. 3, and the overcharging lithium plating interface diagrams of Embodiment 1 and Comparative Embodiment 1 are shown in FIG. 4 and FIG. 5, respectively.

The following conclusions can be drawn from the results of the above tables.
(1) Compared to Comparative Embodiment 1, Embodiment 1 showed a significant film-forming peak at 2.1 V, indicating that the additive of Formula I-1 preferentially underwent dissolution and reduction to form an SEI film rich in inorganic nitrides; at the same time, more inorganic nitrides were introduced into the SEI formed by the electrolyte solution of Embodiment 1 after formation, and the battery of Embodiment 1 had a wider lithium plating window, indicating better kinetic performance; the negative electrode interface of Embodiment 1 after overcharging showed a golden yellow color, with no white lithium layer overlaying same, but the overcharging lithium plating interface without additives in the Comparative Embodiment showed thicker white lithium deposits, indicating that the lithium plating degree at the interface of the battery containing the additive of Formula I-1 was smaller.
(2) Comparison of Embodiments 1 to 5 shows that when the content of the additive is too high, there will be slight lithium plating.

It is hereby noted that the present application is not limited to the foregoing embodiments. The foregoing embodiments are illustrative merely, and any and all embodiments with substantively the same constituents or exerting the same effects as the technical ideas hereof without departing from the scope of the technical solutions of the present application still fall within the technical scope of the present application. In addition, all kinds of variations of the embodiments conceivable by a person skilled in the art and any other embodiments derived by combining some constituents of the embodiments hereof without departing from the subject-matter of the present application still fall within the scope of the present application.

## Claims

1. A lithium-ion battery electrolyte solution, **characterized in that** the lithium-ion battery electrolyte solution comprises a lithium salt, an organic solvent and an additive; wherein the additive comprises a compound represented by Formula I: 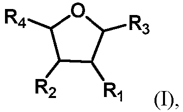 where R₁ to R₄ are each independently selected from a hydrogen atom, a halogen atom, a nitrate ester group, a nitrite ester group, a substituted or unsubstituted C1 to 12 alkyl, and a substituted or unsubstituted C1 to C12 alkoxy, provided that at least one of R1 to R4 is a nitrate ester group.

2. The lithium-ion battery electrolyte solution of claim 1, **characterized in that** substitutions in each substituent group selected by R1 to R4 are independently selected from one or more of a halogen atom; and
preferably, the halogen atom is F.

3. The lithium-ion battery electrolyte solution of claim 1 or 2, **characterized in that** R₁ to R₄ are each independently selected from a hydrogen atom, a halogen atom, a nitrate ester group, a nitrite ester group, a substituted or unsubstituted C1 to C6 alkyl, and a substituted or unsubstituted C1 to C6 alkoxy; and
preferably, R₁ to R₄ are each independently selected from a hydrogen atom, a halogen atom, a nitrate ester group, a nitrite ester group, a substituted or unsubstituted C1 to C2 alkyl, and a substituted or unsubstituted C1 to C2 alkoxy.

4. The lithium-ion battery electrolyte solution of claim 1, **characterized in that** R₁ to R₄ are each independently selected from a hydrogen atom, a halogen atom, a nitrate ester group, a nitrite ester group, methyl, ethyl, and trihaloethyl; and
preferably, R₁ to R₄ are each independently selected from a hydrogen atom, fluorine, a nitrate ester group, a nitrite ester group, methyl, ethyl, and trifluoroethyl.

5. The lithium-ion battery electrolyte solution of claim 1, **characterized in that** the additive comprises one or more of following compounds:

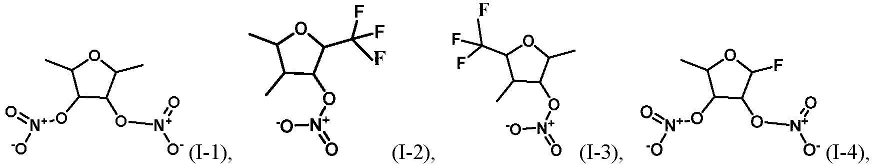

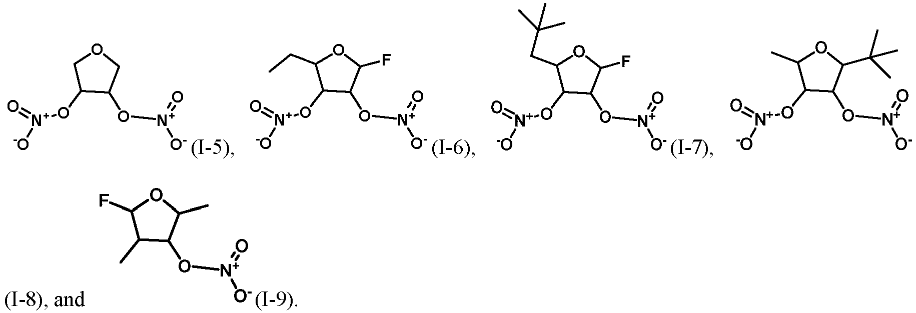

6. The lithium-ion battery electrolyte solution of any one of claims 1, 2, 4 and 5, **characterized in that** a mass percent of the additive is 0.03% to 5%, and preferably 0.1% to 3%.

7. The lithium-ion battery electrolyte solution of any one of claims 1, 2, 4 and 5, **characterized in that** the lithium salt is selected from one or more of lithium hexafluorophosphate, lithium bis(fluorosulfonyl)imide, lithium tetrafluoroborate, lithium bistrifluoromethanesulfonimide, lithium difluoro oxalate borate, lithium bis(oxalate)borate, lithium perchlorate, lithium hexafluoroarsenate, and lithium trifluoromethanesulfonate;
preferably, the lithium salt is selected from one or more of lithium hexafluorophosphate or lithium bis(fluoro-sulfonyl)imide; and
preferably, a concentration of the lithium salt is 0.5 mol/L to 2.0 mol/L, and more preferably 0.8 mol/L to 1.5 mol/L.

8. The lithium-ion battery electrolyte solution of any one of claims 1, 2, 4 and 5, **characterized in that** the organic solvent is selected from cyclic carbonate, cyclic carboxylate, chain carbonate or a chain carboxylate compound of C1 to C8;
preferably, the organic solvent is selected from one or more of dimethyl carbonate, diethyl carbonate, ethyl methyl carbonate, dipropyl carbonate, methyl propyl carbonate, ethylene carbonate, propylene carbonate, ethyl acetate, ethyl propionate, propyl propionate, butyrolactone, methyl trimethylacetate, and methyl pentanoate; and
preferably, in molecules of the organic solvent, a content of water molecules is smaller than or equal to 10 ppm, and a content of hydrofluoric acid is smaller than or equal to 200 ppm.

9. A secondary battery, **characterized in that** the secondary battery comprises the lithium-ion battery electrolyte solution of any one of claims 1 to 8.

10. A battery module, **characterized in that** the battery module comprises the secondary battery of claim 9.

11. A battery pack, **characterized in that** the battery pack comprises the secondary battery of claim 9 or the battery module of 10.

12. An electrical device, **characterized in that** the electrical device comprises at least one of the secondary battery of claim 9, the battery module of 10 or the battery pack of 11.
